# EUROPÄISCHE PATENTSCHRIFT

(11) **EP 2 533 405 B1**
(45) Veröffentlichungstag und Bekanntmachung des Hinweises auf die Patenterteilung: **25.12.2013**
(21) Anmeldenummer: 11169438.6
(22) Anmeldetag: 10.06.2011
(51) Int. Cl.: H02K 11/00, H02P 29/00, H02H 6/00, H02P 25/02

(54) **Stator für einen EC-Motor sowie EC-Motor mit einem solchen Stator**
Stator for an EC motor and EC motor with such a stator
Stator pour un moteur EC et moteur EC doté d'un tel stator

(43) Veröffentlichungstag der Anmeldung: 12.12.2012
(73) Patentinhaber: ebm-papst Mulfingen GmbH & Co. KG, 74673 Mulfingen (DE)
(72) Erfinder: Hartmann, Holger, 74673 Mulfingen (DE); Futterlieb, Gerd, 74423 Obersontheim (DE)
(74) Vertreter: Patentanwälte Dr. Solf & Zapf

(56) Entgegenhaltungen:
- EP-A1- 2 239 832
- DE-A1- 19 948 396
- DE-A1-102007 040 423
- JP-A- 2008 022 679

## Beschreibung

Die vorliegende Erfindung betrifft gemäß dem Oberbegriff des Anspruchs 1 einen Stator für einen kollektorlosen, elektronisch kommutierten Elektromotor, mit einem ferromagnetischen, mit Statorwicklungen bewickelten Statorkern und mit einer Steuerelektronik zum Ansteuern der Statorwicklungen, wobei der Statorkern zusammen mit den Statorwicklungen mit einer angeformten Umkapselung aus einem Kunststoffmaterial mit einer definierten Wärmeleitfähigkeit (λ_{St}) umschlossen ist, wobei ein Temperatursensor außen an der Umkapselung angeordnet ist.

Ferner betrifft die Erfindung auch einen kollektorlosen Elektromotor mit einem Rotor sowie mit einem Stator der genannten Art.

Derartige Elektro-Gleichstrommotoren, häufig auch EC-Motoren (EC = electronically commutated = elektronisch kommutiert) oder BLDC-Motoren (BLDC = brushless direct current) genannt, müssen in der Praxis mit einem Schutz vor Übertemperaturen ausgestattet sein. Dazu ist es bekannt, so genannte Temperaturwächter, d. h. temperaturabhängige Schaltelemente, oder Temperatursensoren, z. B. PTC-Elemente, direkt am Stator im Bereich der Statorwicklungen, häufig auch innerhalb von die Wicklung aufnehmenden Statornuten, unterzubringen. Daraus resultiert eine aufwändige Herstellung und Montage, weil in aller Regel mehrere, und zwar mindestens drei Temperaturwächter oder -sensoren erforderlich sind, die separat montiert und elektrisch angeschlossen werden müssen, und zwar bevor der Statorkern mit den Wicklungen gegebenenfalls mit einem Kunststoff umkapselt, insbesondere umspritzt wird.

In der JP 2008 022679 A wird eine Umkapselung einer Spule zusammen mit einem Temperatursensor zum Erfassen der Temperatur der Spule beschrieben.

In der EP 2 239 832 A1 wird ein derartiger umkapselter Stator eines Elektromotors beschrieben, bei dem eine Steuerelektronik die vom Temperatursensor ermittelte Temperatur mit einer zuvor festgelegten maximal zulässigen Temperaturschwelle vergleicht. Diese Steuerung basiert auf der Annahme einer konstanten elektrischen Leistungsaufnahme. Zudem wird nicht von der gemessenen Temperatur auf die konkrete Temperatur der Statorwicklungen rückgerechnet.

In der DE 199 48 396 A1 wird ein externes Temperaturüberwachungsmodul für einen Elektromotor beschrieben, welches nicht innerhalb der Umkapselung sondern von außen an die Umkapselung angebracht wird.

Der vorliegenden Erfindung liegt die Aufgabe zu Grunde, einen Stator der gattungsgemäßen Art zu schaffen, der einen vereinfachten Aufbau hat und dadurch einfacher und wirtschaftlicher hergestellt werden kann.

Erfindungsgemäß wird dies durch die Merkmale des unabhängigen Anspruchs 1 erreicht. Vorteilhafte Ausgestaltungsmerkmale der Erfindung sind in den abhängigen Ansprüchen enthalten. Ein kollektorloser Elektromotor ist Gegenstand des Anspruchs 9.

Erfindungsgemäß ist demnach vorgesehen, dass die Steuerelektronik derart ausgelegt ist, dass sie anhand der von dem Temperatursensor erfassten Temperatur unter Berücksichtigung eines in einem Speicher hinterlegten, spezifischen, empirisch ermittelten Stator-Temperaturprofils, das die Wärmeleitfähigkeiten zwischen Statorwicklungen und Temperatursensor und die resultierenden Wärmeübergangswiderstände berücksichtigt, die Temperatur im Bereich der Statorwicklungen kalkuliert. Diese erfindungsgemäße Ausgestaltung vereinfacht die Herstellung erheblich, weil vor dem Anformen, insbesondere Anspritzen der Umkapselung eine aufwändige Montage von Temperatursensoren gänzlich entfallen kann. Der Temperatursensor kann stattdessen mit Vorteil auf einer Leiterplatte angeordnet werden, insbesondere in SMD-Technik (SMD = surfacemounted device), und es braucht dann die Leiterplatte nur noch so mit dem Stator verbunden zu werden, dass der Temperatursensor in einem wärmeleitenden Kontakt mit der Umkapselung steht. Grundsätzlich kann es sich um einen unmittelbaren Kontakt, insbesondere aber um einen mittelbaren Kontakt über ein wärmeleitendes Medium handeln, wobei dieses wärmeleitende Medium eine ebenfalls definierte, bekannte Wärmeleitfähigkeit aufweist. In der Steuerelektronik wird zuvor in einem Speicher das stator-spezifische Temperaturprofil hinterlegt, welches ursprünglich beispielsweise einmal empirisch ermittelt wird und alle Wärmeleitfähigkeiten zwischen den Statorwicklungen und dem Temperatursensor und die daraus resultierenden Wärmeübergangswiderstände so berücksichtigt, dass die Steuerelektronik anhand der von dem Temperatursensor erfassten Temperatur auf die tatsächliche Wicklungstemperatur schließen kann. Erreicht oder überschreitet dieser kalkulierte Temperaturwert den kritischen Wert für die Wicklungstemperatur von ca. 130° C, so schaltet die Steuerelektronik den Wicklungsstrom ab.

Da diese Temperaturerfassung relativ träge ist, ist die Steuerelektronik mit Vorteil mit einer zusätzlichen elektronischen Fehlerüberwachung ausgestattet.

Im Folgenden soll die Erfindung anhand der Zeichnungen beispielhaft weiter erläutert werden. Es zeigen:
- Fig. 1: eine stark schematische Seitenansicht eines erfindungsgemäßen Stators,
- Fig. 2: eine Ausschnittvergrößerung des Bereiches II in Fig. 1,
- Fig. 3: eine Draufsicht in Pfeilrichtung III gemäß Fig. 2 ohne Leiterplatte und
- Fig. 4: ein Diagramm zur Erläuterung der erfindungsgemäßen Temperaturerfassung.

In den verschiedenen Figuren der Zeichnung sind gleiche Teile stets mit den gleichen Bezugszeichen versehen.

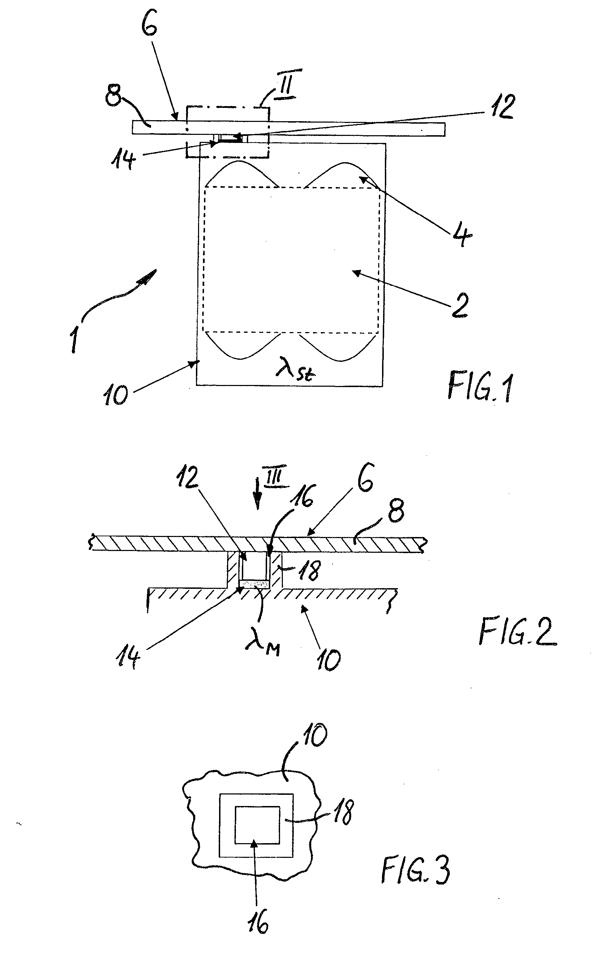

In Fig. 1 ist ein erfindungsgemäßer Stator 1 stark vereinfacht und schematisch dargestellt. Demnach besteht der Stator 1 aus einem gestrichelt angedeuteten ferromagnetischen Statorkern 2, der mit Statorwicklungen 4 bewickelt ist. Zum elektrischen Ansteuern der Statorwicklungen 4, insbesondere auch zur Kommutierung, weist der Stator 1 zudem eine Steuerelektronik 6 auf, die in den Zeichnungen nicht im Einzelnen dargestellt ist, sondern es ist nur eine Leiterplatte 8 erkennbar, auf der die Steuerelektronik 6 bzw. deren Bauteile zumindest teilweise angeordnet sind. Der Statorkern 2 ist zusammen mit den Statorwicklungen 4 vollständig mit einer angeformten Umkapselung 10 aus einem Kunststoffmaterial umschlossen. Diese Umkapselung 10 ist in Fig. 1 künstlich transparent dargestellt, um den Statorkern 2 mit den Statorwicklungen 4 erkennen zu können. Die Umkapselung 10 wird bevorzugt in einem Spritzformwerkzeug gebildet.

Im Übrigen hat der Stator 1 eine übliche Ausbildung, um einen nicht dargestellten Rotor, der bevorzugt als ein den Stator 1 umschließender Außenläufer ausgebildet ist, drehbar lagern zu können.

Erfindungsgemäß ist nun mindestens ein Temperatursensor 12 außen an der Umkapselung 10 angeordnet. Dabei ist die Steuerelektronik 6 erfindungsgemäß derart ausgelegt, dass sie anhand der von dem Temperatursensor 12 erfassten Temperatur unter Berücksichtigung eines in einem Speicher hinterlegten, spezifischen Stator-Temperaturprofils die Temperatur im Bereich der Statorwicklungen 4 kalkuliert.

In bevorzugter Ausgestaltung ist der Temperatursensor 12 - insbesondere als SMD-Bauteil - auf der Leiterplatte 8 angeordnet, wobei die Leiterplatte 8 mit dem Stator 1 so verbunden ist, dass der Temperatursensor 12 in einem wärmeleitenden Kontakt mit der Umkapselung 10 steht. Grundsätzlich kann es sich um einen unmittelbaren, wärmeleitenden Kontakt handeln. In der dargestellten, bevorzugten Ausführung ist allerdings vorgesehen, dass der Temperatursensor 12 mittelbar über ein wärmeleitendes Medium 14 in wärmeleitendem Kontakt mit der Umkapselung 10 steht.

Für das hinterlegte, spezifische Stator-Temperaturprofil ist es wesentlich, dass das Material der Umkapselung 10 eine definierte und bekannte spezifische Wärmeleitfähigkeit λ_{St} aufweist. Auch das wärmeleitende Medium 14 weist eine definierte, bekannte spezifische Wärmeleitfähigkeit λ_{M} auf. Aus diesen Wärmeleitfähigkeiten resultieren jeweils thermische Widerstände, die zwischen den Statorwicklungen 4 und dem Temperatursensor 12 wirksam sind.

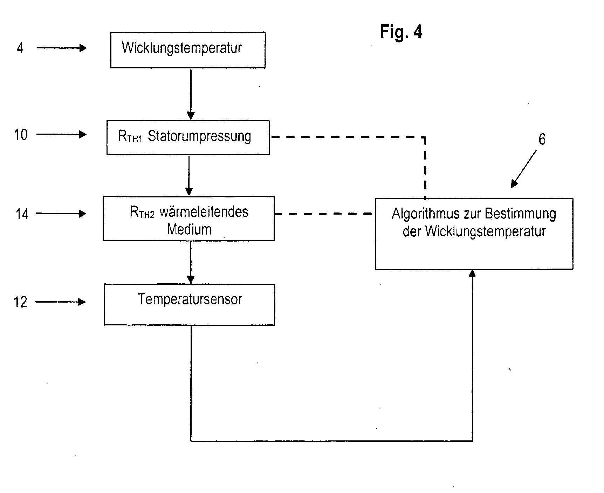

Hierzu wird an dieser Stelle auf das Diagramm in Fig. 4 verwiesen. Zwischen den Statorwicklungen 4 und der dort vorhandenen tatsächlichen Wicklungstemperatur und dem Temperatursensor 12 sind einerseits der aus der Wärmeleitfähigkeit λ_{St} resultierende thermische Widerstand R_{Th1} der Umkapselung 10 sowie andererseits der aus der Wärmeleitfähigkeit λ_{M} des wärmeleitenden Mediums 14 resultierende Wärmewiderstand R_{Th2} wirksam. Der Temperatursensor 12 erfasst folglich eine Temperatur, die geringer als die tatsächliche Wicklungstemperatur ist. Anhand dieser von dem Temperatursensor 12 erfassten Temperatur errechnet die Steuerelektronik 6 unter Berücksichtigung des hinterlegten Temperaturprofils die tatsächliche Wicklungstemperatur.

Wie sich weiterhin aus Fig. 1 bis 3 ergibt, ist der Temperatursensor 12 vorzugsweise derart in einer angeformten, taschenartigen Aufnahme 16 der Umkapselung 10 angeordnet, dass er von der Umgebungstemperatur abgeschirmt ist. Gemäß Fig. 2 und 3 ist die Aufnahme 16 von einer umlaufenden, bevorzugt in Draufsicht rechteckigen Stegwandung 18 umschlossen und nur in Richtung der Leiterplatte 8 zum Eingriff des Temperatursensors 12 offen. Die Leiterplatte 8 kommt in der montierten Stellung gemäß Fig. 2 zur direkten Anlage auf der Stegwandung 18, so dass der Temperatursensor 12 vollständig umschlossen ist.

Die spezifische Wärmeleitfähigkeit λ_{St} des Materials der Umkapselung 10 beträgt mindestens 0,4 W / m · K. Je höher die Wärmeleitfähigkeit, desto genauer ist die Temperaturbestimmung.

Das wärmeleitende Medium 14 ist zumindest Luft mit einer spezifischen Wärmeleitfähigkeit λ_{M} von 0,026 W / m · K. Es kann aber auch ein Material mit einer höheren Wärmeleitfähigkeit λ_{M} eingesetzt werden.

Wesentlich ist nur, dass die Wärmeleitfähigkeiten bekannt sind, um das resultierende Temperaturprofil berücksichtigen und in der Steuerelektronik 6 hinterlegen zu können.

Die Steuerelektronik 6 weist eine Abschalteinrichtung zum Abschalten der Statorwicklungen 4 bei Erreichen oder Überschreiten eines Temperatur-Grenzwertes auf. Wegen einer gewissen Trägheit der erfindungsgemäßen Temperaturerfassung enthält die Steuerelektronik 6 mit Vorteil eine zusätzliche elektronische Fehlerüberwachung. Hierbei kann es sich um eine so genannte "protective device" im Sinne der EN 60335-1 bzw. UL 60730 mit mindestens einem Mikrocontroller handeln.

## Patentansprüche

1. Stator (1) für einen kollektorlosen, elektronisch kommutierten Elektromotor,
wobei der Stator einen mit Statorwicklungen (4) bewickelten Statorkern (2) und eine Steuerelektronik (6) zum Ansteuern der Statorwicklungen (4) aufweist,
wobei der Statorkern (2) zusammen mit den Statorwicklungen (4) mit einer angeformten Umkapselung (10) aus einem Kunststoffmaterial mit einer definierten Wärmeleitfähigkeit (λₛₜ) umschlossen ist,
wobei ein Temperatursensor (12) außen an der Umkapselung (10) angeordnet ist, **dadurch gekennzeichnet,**
**dass** die Steuerelektronik (6) derart ausgelegt ist, dass sie anhand der von dem Temperatursensor (12) erfassten Temperatur unter Berücksichtigung eines in einem Speicher hinterlegten, spezifischen, empirisch ermittelten Stator-Temperaturprofils, das die Wärmeleitfähigkeiten zwischen Statorwicklungen und Temperatursensor und die resultierenden Wärmeübergangswiderstände berücksichtigt, die Temperatur im Bereich der Statorwicklungen (4) kalkuliert.

2. Stator nach Anspruch 1,
**dadurch gekennzeichnet, dass** der Temperatursensor (12) - insbesondere als SMD-Bauteil - auf einer Leiterplatte (8) angeordnet ist, wobei die Leiterplatte (8) mit dem Stator (1) so verbunden ist, dass der Temperatursensor (12) unmittelbar oder mittelbar über ein wärmeleitendes Medium (14) mit einer definierten Wärmeleitfähigkeit (λ_{M}) in einem wärmeleitenden Kontakt mit der Umkapselung (10) steht.

3. Stator nach Anspruch 1 oder 2,
**dadurch gekennzeichnet, dass** der Temperatursensor (12) derart in einer
angeformten, taschenartigen Aufnahme (16) der Umkapselung (10) angeordnet ist, dass er von der Umgebungstemperatur abgeschirmt ist.

4. Stator nach einem der Ansprüche 1 bis 3,
**dadurch gekennzeichnet, dass** die Wärmeleitfähigkeit (λ_{St}) des Materials der Umkapselung (10) mindestens 0,4 W / m · K beträgt.

5. Stator nach einem der Ansprüche 2 bis 4,
**dadurch gekennzeichnet, dass** das wärmeleitende Medium (14) zumindest Luft mit einer Wärmeleitfähigkeit (λ_{M}) von 0,026 W / m · K oder ein Material mit einer höheren Wärmeleitfähigkeit (λ_{M}) ist.

6. Stator nach einem der Ansprüche 2 bis 5,
**dadurch gekennzeichnet, dass** die Steuerelektronik (6) zumindest teilweise gemeinsam mit dem Temperatursensor (12) auf der gleichen Leiterplatte (8) angeordnet ist.

7. Stator nach einem der Ansprüche 1 bis 6,
**dadurch gekennzeichnet, dass** die Steuerelektronik (6) eine Abschalteinrichtung zum Abschalten der Statorwicklungen (14) bei Erreichen oder Überschreiten eines Temperatur-Grenzwertes aufweist.

8. Stator nach einem der Ansprüche 1 bis 7,
**dadurch gekennzeichnet, dass** die Steuerelektronik (6) eine zusätzliche elektronische Fehlerüberwachung enthält.

9. Kollektorloser, elektronisch kommutierter Elektromotor mit einem Rotor und einem Stator (1) nach einem der vorhergehenden Ansprüche.

## Claims

1. A stator (1) for a brushless, electronically commutated electric motor,
the stator having a stator core (2) wound with stator windings (4) and control electronics (6) to control the stator windings (4),
the stator core (2) together with the stator windings (4) being enclosed in a moulded encapsulation (10) made of a plastics material of a defined thermal conductivity (λₛₜ),
a temperature sensor (12) being arranged externally on the encapsulation (10),
**characterized in that**
the control electronics (6) are designed such that they calculate the temperature in the region of the stator windings (4) on the basis of the temperature detected by the temperature sensor (12) taking into account a specific, empirically determined temperature profile of the stator stored in a memory, which profile takes into account the thermal conductivities between the stator windings and the temperature sensor and the resulting heat transfer resistances.

2. A stator according to claim 1,
**characterized in that** the temperature sensor (12) - in particular as an SMD component - is arranged on a printed circuit board (8), the printed circuit board (8) being connected to the stator (1) such that the temperature sensor (12) is in direct or indirect thermally conductive contact with the encapsulation (10) via a thermally conductive medium (14) of a defined thermal conductivity (λ_{M}).

3. A stator according to claim 1 or 2,
**characterized in that** the temperature sensor (12) is arranged in a moulded-on, pocket-like support (16) of the encapsulation (10) such that it is shielded from the ambient temperature.

4. A stator according to any one of claims 1 to 3,
**characterized in that** the thermal conductivity (λₛₜ) of the material of the encapsulation (10) is at least 0.4 W / m · K.

5. A stator according to any one of claims 2 to 4,
**characterized in that** the thermally conductive medium (14) is at least air having a thermal conductivity (λ_{M}) of 0.026 W / m · K or a material of a higher thermal conductivity (λ_{M}).

6. A stator according to any one of claims 2 to 5,
**characterized in that** the control electronics (6) are at least in part arranged together with the temperature sensor (12) on the same printed circuit board (8).

7. A stator according to any one of claims 1 to 6,
**characterized in that** the control electronics (6) have a turn-off device to turn the stator windings (14) off when a temperature threshold value is reached or exceeded.

8. A stator according to any one of claims 1 to 7,
**characterized in that** the control electronics (6) have an additional electronic error control.

9. A brushless, electronically commutated electric motor having a rotor and a stator (1) according to any one of the preceding claims.

## Revendications

1. Stator (1) destiné à un moteur électrique sans collecteur à commutation électronique,
dans lequel le stator présente un noyau de stator (2) enroulé avec des enroulements statoriques (4) et un équipement électronique de commande (6) servant à commander les enroulements statoriques (4),
dans lequel le noyau de stator (2) conjointement avec les enroulements statoriques (4) est entouré d'un ensemble d'encapsulation (10) formé constitué d'un matériau en plastique présentant une conductivité thermique (λₛₜ) définie,
dans lequel le capteur de température (12) est disposé à l'extérieur au niveau de l'ensemble d'encapsulation (10),
**caractérisé en ce que**
l'équipement électronique de commande (6) est configuré de telle manière qu'il calcule la température dans la zone des enroulements statoriques (4), à l'aide de la température détectée par le capteur de température (12), en tenant compte d'un profil de température du stator spécifique, déterminé de manière empirique, mémorisé dans une mémoire, lequel profil de température tient compte des conductivités thermiques entre les enroulements statoriques et le capteur de température et des résistances à la transmission de chaleur en découlant.

2. Stator selon la revendication 1,
**caractérisé en ce que** le capteur de température (12), en particulier en tant que composant CMS, est disposé sur une carte de circuit imprimé (8), dans lequel la carte de circuit imprimé (8) est reliée au stator (1) de telle manière que le capteur de température (12) se trouve en contact thermoconducteur avec l'ensemble d'encapsulation (10) directement ou indirectement par l'intermédiaire d'un milieu (14) thermoconducteur présentant une conductivité thermique (λ_{M}) définie.

3. Stator selon la revendication 1 ou 2,
**caractérisé en ce que** le capteur de température (12) est disposé de telle manière dans un logement (16) de l'ensemble d'encapsulation (10) moulé en forme de poche que ledit capteur de température est protégé de la température ambiante.

4. Stator selon l'une quelconque des revendications 1 à 3,
**caractérisé en ce que** la conductivité thermique (λ_{St}) du matériau de l'ensemble d'encapsulation (10) est d'au moins 0,4 W / m · K.

5. Stator selon l'une quelconque des revendications 2 à 4,
**caractérisé en ce que** le milieu (14) thermoconducteur est au moins de l'air présentant une conductivité thermique (λ_{M}) de 0,026 W / m · K ou un matériau présentant une conductivité thermique plus élevée (λ_{M}).

6. Stator selon l'une quelconque des revendications 2 à 5,
**caractérisé en ce que** l'équipement électronique de commande (6) est disposé au moins en partie conjointement avec le capteur de température (12) sur la même carte de circuit imprimé (8).

7. Stator selon l'une quelconque des revendications 1 à 6,
**caractérisé en ce que** l'équipement électronique de commande (6) présente un dispositif de mise hors circuit servant à mettre hors circuit les enroulements statoriques (14) lorsque la température atteint ou dépasse une valeur limite.

8. Stator selon l'une quelconque des revendications 1 à 7,
**caractérisé en ce que** l'équipement électronique de commande (6) contient un système électronique de surveillance de dysfonctionnement supplémentaire.

9. Moteur électrique sans collecteur, à commutation électronique équipé d'un rotor et d'un stator (1) selon l'une quelconque des revendications précédentes.
